# EUROPEAN PATENT SPECIFICATION

(11) **EP 1 386 512 B1**
(45) Date of publication and mention of the grant of the patent: **24.06.2009**
(21) Application number: 02718752.5
(22) Date of filing: 02.04.2002
(51) Int. Cl.: H04W 64/00

(54) **PROCEDURE FOR POSITIONING IN A WIRELESS COMMUNICATION NETWORK**
PROZEDUR ZUR POSITIONSBESTIMMUNG IN EINEM DRAHTLOSEN KOMMUNIKATIONSNETZ
PROCEDURE POUR POSITIONNEMENT DANS UN RESEAU DE COMMUNICATION SANS FIL

(30) Priority: 02.04.2001 SE 0101173
(43) Date of publication of application: 04.02.2004
(73) Proprietor: TELIASONERA AB, 106 63 Stockholm (SE)
(72) Inventor: BERGENDORFF, Hans, S-175 45 Järfälla (SE)
(74) Representative: Hopfgarten, Nils
(86) International application number: PCT/SE2002/000655
(87) International publication number: WO 2002/080608

(56) References cited:
- WO-A1-00/64208
- WO-A1-01/15469
- US-B1- 6 169 903

## Description

### Technical field

The present invention generally relates to positioning/position finding. More exactly, the present invention relates to a procedure for positioning/finding the positions of at least two units for wireless communication.

### Prior art

Systems for positioning/position finding by means of wireless communication between a unit for wireless communication and a central positioning system have been developed in recent years. Examples of such systems are GPS (Global Positioning System), and for cellular positioning intended systems which utilize methods such as TOA (Time of Arrival), TDOA (Time Difference if Arrival), AOA (Angle of Arrival) and E-OTD (Enhanced Observed Time Difference). These systems for positioning are based on that the person or the vehicle who/which shall be the object of the positioning is carrying a unit for wireless communication, which continuously, or at regular intervals, communicates with a positioning system to find/determine a current position.

By use of such positioning systems then the person or the vehicle can be controlled/monitored centrally by the unit for wireless communication transmitting its position to a surveillance center together with an identification.

The communication between the unit for wireless communication and the positioning system results in a load of the positioning system. A problem of increased load of the positioning system consequently occurs at increased number/amount of units for wireless communication which shall be object of the positioning. Further, the communication between the unit for wireless communication and the positioning system results in a load of the unit for wireless communication. This will increase the power consumption of the unit, which will reduce the active time of the unit. The communication in some cases also will result in a cost for the user of the unit for wireless communication.

At surveillance of units for wireless communication which shall be supervised/monitored in a surveillance center is required that the units transmit its current position and an identification at regular intervals to the surveillance center. This communication where a unit for wireless communication transmits its position to a surveillance center together with an identification will result in a large number of transmissions to the surveillance center when a large quantity of units for wireless communication shall be supervised/monitored. Further, the power consumption of respective unit will be large, which will reduce the active time of the unit for wireless communication. The communication normally also results in a cost for respective users of the units for wireless communication.

### Summary of the invention

The aim of the present invention is to at least partially eliminate above mentioned problem. This aim is achieved according to the invention by a procedure as defined in the enclosed claim 1.

The invention is based on the understanding of that information transmission at positioning suitably is coordinated for a number of units for wireless communication. Consequently transmission of information to central systems, such as positioning systems or surveillance systems, is made from an appointed unit of a number of units for wireless communication. Other units for wireless communication of the plurality of units then communicate with the appointed unit.

By the procedure, information regarding the units consequently can be transmitted to a central system without any communication being made between the central system and all units. As a matter of fact communication only is needed between one appointed unit and the central system. Other units utilize short distance communication for transmission of information to the appointed unit. This results in that the load of the central system will be the same for said at least two units as for only one unit. Further, the limitation of the communication with the central system to an appointed unit results in a reduced total cost in comparison with if all units should communicate with the central system directly. This is due to the fact that the short distance communication normally is free of charge, whereas the communication with the central system normally involves a cost for the user. Further, the short distance communication normally results in a lower current consumption than communication with the central system, which results in that the units for wireless communication, which normally are operated by batteries, either will have a longer active time, or that batteries at the units can be made smaller.

Example of information which is transmitted is identity information. The transmission of identity information for the rest of the units is first made to the appointed unit from the other units by wireless short distance communication. The identity information of/for all units is transmitted from the appointed unit to the centralsystem by wireless communication.

According to one embodiment, the central system obtains/receives the position of the appointed unit. The positions of the other units are then approximated by/to the position of the appointed unit.

The position of the appointed unit is obtained for instance in the central system by it being found out/determined in the central system. The position in this case is found out preferably by the identity information of the units being transmitted from the appointed unit to the central system via a radio signal, and that the central system determines the position of the appointed unit on basis of the reception of the radio signal.

Alternatively, the position of the appointed unit is obtained in the central system by information regarding the position of the appointed unit first being obtained/received in the appointed unit, for instance from a positioning system such as GPS. The information regarding the position of the appointed unit then is transmitted from the appointed unit to the central system by wireless communication.

It should be noted that it is also possible that information regarding the position of the appointed unit is transmitted to the central system from any other system or any other unit which has information about the position of the appointed unit available, or which can calculate the position.

Irrespective of whether the position is found out/determined in the central system, for instance by analysis of received signals from the appointed unit, or if the position is transmitted to the central system from any other system or any other unit, such as from the appointed unit, the central system has access to the identities of all two or more units and approximate information about their positions.

The approximation of the positions of the other units has a margin of error which is due to that the other units in reality are located at a distance from the appointed unit. This margin of error can be limited in different ways. It can for instance be limited by all short distance communication being made directly between the other units and the appointed unit. In this way the units will be located within a distance from the appointed unit which is limited by the longest distance which is allowed by the type of short distance communication that is used.

Alternatively, the margin of error can be limited by the short distance communication being made directly between the appointed unit and a first number/subset of the other units and via a unit in said first subset between the appointed unit and a second subset of the other units. The limitation of the margin of error in this case is twice the largest distance which is allowed the type of short distance communication that is used. This is due to the fact that the communication is allowed to pass via another unit among the other units.

The appointed unit can be just any unit within a zone. For instance can the appointed unit be selected as a unit which intends to transmit information to the central system. This unit then makes an inquiry to all units which are at such a distance from the appointed unit that they can be reached by means of short distance communication, if these want to transmit/transfer any information to the central system at the same time. The distance can, as above mentioned, be given as a multiple of the longest distance which is allowed with the type of short distance communication that is used. Whether a unit within the selected distance shall transmit information to the appointed unit in connection with positioning can, for instance, preferably be decided locally in respective unit after reception of an enquiry from the appointed unit.

In an alternative embodiment, the position of/for respective unit of said two or more units are obtained in the central system. The positions of the two or more units can, for instance, be calculated in the central system. Alternatively, information regarding the position of the unit is obtained in respective unit. This information then is transmitted to the appointed unit from respective unit of the other units by wireless short distance communication. Finally, the information from the appointed unit is transmitted to the central system by wireless communication.

An example of short distance communication which can be utilized according to the invention is Bluetooth. The transmission of information between the appointed unit and the central system can, for instance, be made in SMS-message in a GSM-network. The position of the units can be calculated by means of GPS or any other method for positioning in GSM-systems or other radio communication systems.

### Brief description of the drawings

The invention will be described in detail in the following with reference to enclosed drawings, in which
Figure 1 shows a schematic diagram over a system in which a procedure according to the invention can be realized with advantage;
Figure 2 shows a flow chart for a procedure according to one embodiment of the invention;
Figure 3 shows a flow chart for a procedure according to another embodiment of the invention;
Figure 4 shows a flow chart for a procedure according to yet another embodiment of the invention.
Figure 5 shows a flow chart for a procedure according to yet another embodiment of the invention.

### Description of preferred embodiments

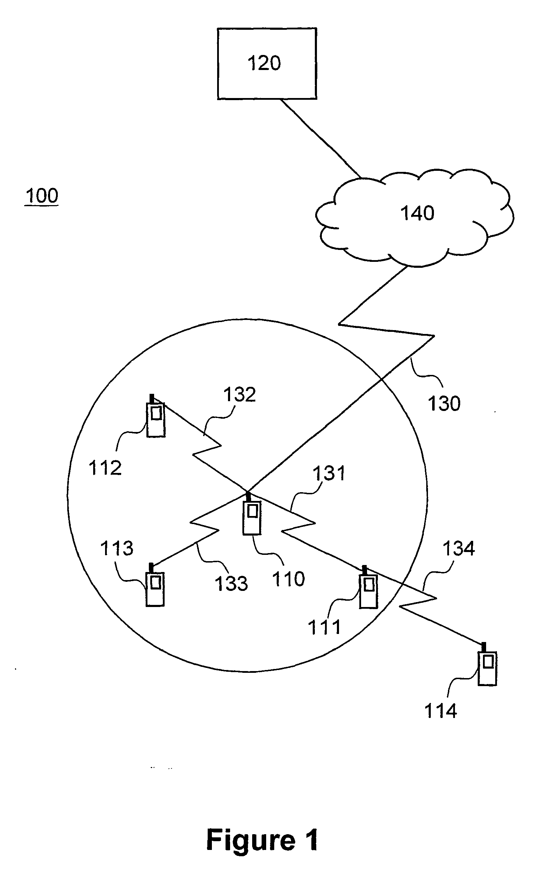

In Figure 1, a schematic diagram over a system 100 is shown in which a procedure according to the invention can be realized with advantage. In the system a number of units 110-114 for wireless communication, in this case mobile telephones, are included. The mobile telephone 110 can communicate with a central system 120, by wireless communication 130 via a mobile telephone system 140, such as a GSM-system. Note that also the other mobile telephones 111-114 can be, and in all probability are, connected to the mobile telephone system 140, but that they in a procedure according to the invention need not communicate directly with the central system 120. Further, the mobile telephones 110-114 are equipped with devices for some form of short distance communication 131-134, such as Bluetooth. By means of these devices the mobile telephones also can communicate directly with each other without utilizing the GSM-system 140. The distance which the short distance communication allows, however, is limited. This is indicated in Figure 1 by a circle around the mobile telephone 110 with a radius which is equal to the distance which the short distance communication allows. There, however, exist methods to make it possible for the mobile telephone 114, which is located outside this circle, to transmit information to the mobile telephone 110 by short distance communication. The mobile telephone 114 can, for instance, first transmit the information to the mobile telephone 111 by short distance communication, and the mobile telephone 111 then transmit the information to the mobile telephone 110 by short distance communication. This of course implies that the distance between the mobile telephone 114 and the mobile telephone 111 is shorter than the longest distance that is allowed by the short distance communication. This method can be extended to that information is transmitted in a number of jumps, where the short distance communication can be used for transmission of information between mobile telephones which are located at a distance which are several multiples of the longest distance that the short distance communication allows.

If information shall be transmitted to the central system 120 from the mobile telephones 110-114, this is made by the information first being transmitted to the mobile telephone 110 by short distance communication 131-134, and then from the mobile telephone 110 to the central system 120 by wireless communication 130 via the mobile telephone system 140.

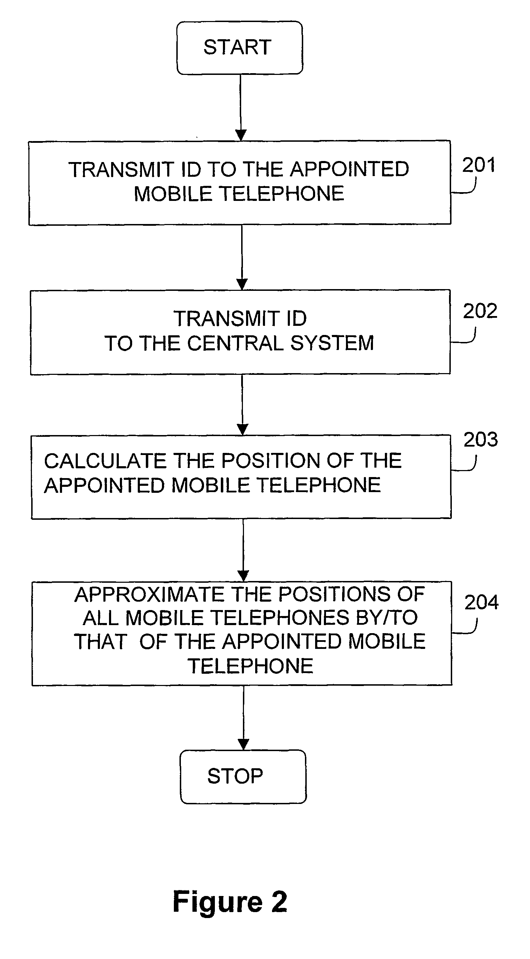

Figure 2 shows a flow chart for a procedure according to one embodiment of the invention which can be realized in a system according to Figure 1. This procedure is typically used at coordination of the positioning of the positions of a number of mobile telephones, or other units for wireless communication, which are located within a distance which allows that all mobile telephones can communicate with an appointed mobile telephone by short distance communication.

In the procedure according to the embodiment, respective mobile telephone of a number of mobile telephones, which are equipped with devices for short distance communication, transmits its identification to an appointed mobile telephone in the step 201. When the appointed unit has received the identifications from the other mobile telephones, it compiles the identifications of all mobile telephones which shall be object of the positioning and transmits, in the step 202, an SMS-message with the identifications to a central system, such as a Mobile Positioning Center (MPC). In said MPC then the position of the appointed mobile telephone is calculated in the step 203 by use of any of the known methods for finding the position of a mobile telephone.

In said MPC then the positions of all mobile telephones the identifications of which have been transmitted from the appointed mobile telephone are approximated by the position of the appointed mobile telephone (step 204). This approximation has a margin of error which is equal to the longest distance that is allowed by the short distance communication.

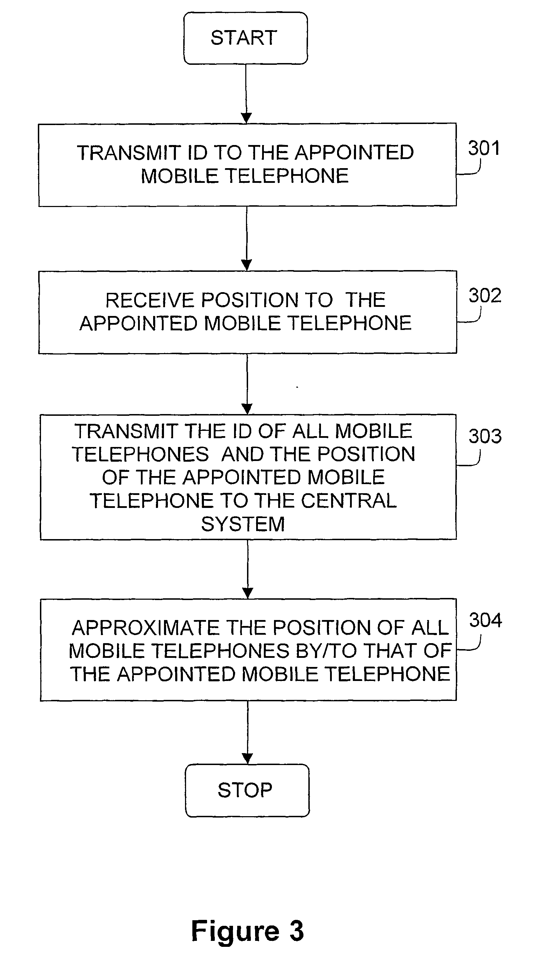

Figure 3 shows a flow chart for a procedure according to another embodiment of the invention which can be realized in a system according to Figure 1. This procedure is typically used at surveillance of the position of/for a number of mobile telephones, or other units for wireless communication, which are located within a distance which allows that all mobile telephones can communicate with an appointed mobile telephone by short distance communication.

In the procedure according the embodiment, respective mobile telephone of a number of mobile telephones, which are equipped with devices for short distance communication, transmits its identification to an appointed mobile telephone in the step 301. Further, the appointed mobile telephone receives information regarding its position from a positioning/position finding system, such as GPS, in the step 302. When the appointed unit has received the identifications from other mobile telephones and its position, it compiles the identifications of all mobile telephones and transmits, in the step 303, an SMS-message with this information to a central system, such as a mobile surveillance center.

In the mobile surveillance center, the positions of all mobile telephones the identifications of which have been transmitted from the appointed mobile telephone are approximated by/to the position of the appointed mobile telephone (step 304). This approximation has a margin of error which is equal to the longest distance that is allowed by the short distance communication.

The transmission to the appointed mobile telephone of identity information by short distance communication in Figure 2 and 3 can also be made by the transmission of information being made by a number of jumps. In this case the position can be found/determined for mobile telephones which are located within a distance from the appointed mobile telephone, which distance is a multiple of the longest distance which is allowed by the short distance communication. The difference in this case is that the margin of error for/of the positioning will increase to the corresponding multiple of the longest distance which is allowed by the short distance communication.

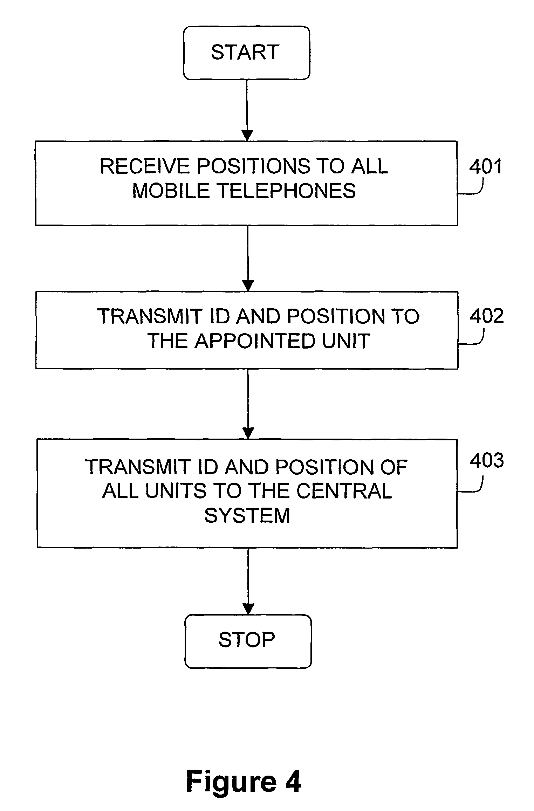

Figure 4 shows a flow chart of a procedure according to yet another embodiment of the invention which can be realized in a system according to Figure 1. This procedure is typically used at surveillance of the position of a number of mobile telephones, or other units for wireless communication, which are located within a distance which allows that all mobile telephones can communicate with an appointed mobile telephone by short distance communication.

In the procedure according to the embodiment respective mobile telephone of a number of mobile telephones which are equipped with devices for short distance communication, receives, in the step 401, its position from a positioning system, such as GPS. Further, respective mobile telephone transmits its identification and its position to an appointed mobile telephone in the step 402. When the appointed unit has received the identifications and the position from/of the other mobile telephones, it compiles the identifications and the positions of all mobile telephones and transmits, in the step 403, an SMS-message with this information to a central system, such as a mobile surveillance center.

The transmission of identity information by short distance communication to the appointed mobile telephone in Figure 2 and 3 also can be made by the transmission of information being made by a number of jumps. In this case the position can be found out of mobile telephones which are located within a distance from the appointed mobile telephone, which distance is a multiple of the longest distance which is allowed by the short distance communication.

Not all mobile telephones which are located within a distance from an appointed mobile telephone which allows short distance communication need not, of course, transmit information to the appointed mobile telephone. Whether a mobile telephone shall transmit information can, for instance, be decided locally in respective mobile telephone after reception of an enquiry from the appointed mobile telephone. Such an enquiry is best transmitted when a mobile telephone in any case shall transmit information to a central system, in order to in this way take the opportunity to transmit information from the other units at the same time if this is needed.

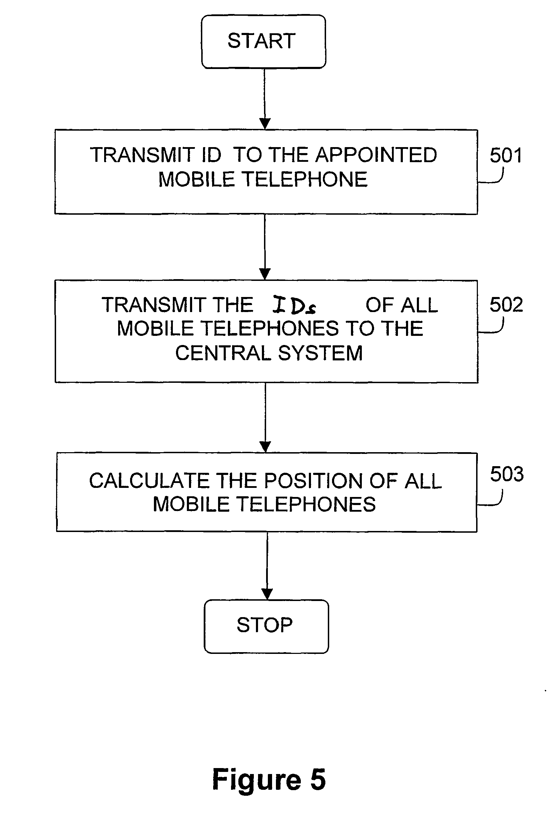

Figure 5 shows a flow chart of a procedure according to one embodiment of the invention which can be realized in a system according to Figure 1. This procedure is typically used at coordination of the positioning of position of a number of mobile telephones, or other units for wireless communication, which are located within a distance which allows that all mobile telephones can communicate with an appointed mobile telephone by short distance communication.

In the procedure according to the embodiment, respective mobile telephone of a number of mobile telephones, which are equipped with devices for short distance communication, transmits its identification to an appointed mobile telephone in the step 501. When the appointed unit has received the identifications from the other mobile telephones, it compiles the identifications of all mobile telephones the positions of which shall be found, and transmits, in the step 502, an SMS-message with the identifications to a central system, such as a Mobile Positioning Center (MPC). In said MPC is then calculated the position of all mobile telephones the identifications of which have been transmitted to said MPC in the step 503, by use of any of the known methods for positioning of a mobile telephone.

One example of when the embodiments which are described in Figure 2-5 can be used with advantage is at supervision/control/monitoring of the position of a number of mobile units, such as vehicles or persons. If a trucking business, for instance, wants to observe/control/monitor where its trucks are, each truck can be equipped with a unit for wireless communication, which at regular intervals transmits a message for finding/positioning its position or which includes an indication of its position. By the embodiments above, this type of control/monitoring might be coordinated for a number of vehicles.

## Claims

1. A procedure at positioning two or more units (110, 111, 112, 113, 114) for wireless communication, including the steps:
dividing said two or more units (110, 111, 112, 113, 114) in an appointed unit (110) and other units (111, 112, 113, 114);
transmitting (201; 301; 402; 501) information regarding said other units (111, 112, 113, 114) from said other units (111, 112, 113, 114) to said appointed unit (110) by means of wireless short distance communication (131, 132, 133, 134); and
transmitting (202; 303; 403; 502) information regarding said two or more units (110, 111, 112, 113, 114) from said appointed unit (110) to a central system (120) by means of wireless communication (130).

2. A procedure as claimed in claim 1, at which the step to transmit information includes the steps:
to, to the appointed unit (110) of said two or more units (110, 111, 112, 113, 114), transmit (201; 301; 402; 501) identity information of other units (111, 112, 113, 114) of said two or more units (110, 111, 112, 113, 114) from said other units (111, 112, 113, 114) by wireless short distance communication (131, 132, 133, 134); and
to transmit (202; 303; 403; 502) identity information of said two or more units (110, 111, 112, 113, 114) from said appointed unit (110) to said central system (120) by wireless communication (130).

3. A procedure as claimed in claim 2, further including the steps:
to, in said central system (120), receive information regarding the position of said appointed unit (110); and
to, in said central system (120), approximate (204; 304) the position of said other units (111, 112, 113, 114) by the position of said appointed unit (110).

4. A procedure as claimed in claim 3, at which the step to, in said central system (120), receive information regarding the position of said appointed unit (110) include the step:
to, in said central system (120), determine the position of said appointed unit (110) by means of a positioning system.

5. A procedure as claimed in claim 4, at which said identity information of said two or more units (110, 111, 112, 113, 114) are transmitted from said appointed unit (110) to said central system (120) via a radio signal, and at which said central system (120) determines the position of said appointed unit (110) on the basis of the reception of said radio signal.

6. A procedure as claimed in claim 3, further including the steps:
to, in an appointed unit (110) of said two or more units (110, 111, 112, 113, 114), receive information regarding the position of said appointed unit (110); and
to transmit information regarding said appointed unit (110) from said appointed unit (110) to said central system (120) by wireless communication (130).

7. A procedure as claimed in claim 2, further including the step:
to, in said central system (120), determine the position of respective unit (110, 111, 112, 113, 114) of said two or more units (110, 111, 112, 113, 114).

8. A procedure as claimed in claim 2, further including the steps:
to, in respective unlit (110, 111, 112, 113, 114) of said two or more units (110, 111, 112, 113, 114), receive information regarding the position of the unit (110, 111, 112, 113, 114);
to, to the appointed unit (110) of said two or more units (110, 111, 112, 113, 114), transmit (201; 301; 402; 501) information regarding the position of respective unit (111, 112, 113, 114) of other units (111, 112, 113, 114) of said two or more units (110, 111, 112, 113, 114) from said other units (111, 112, 113, 114) by wireless short distance communication (131, 132, 133, 134); and
to transmit (202; 303; 403; 502) information regarding the position of said two or more units (110, 111, 112, 113, 114) from said appointed unit (110) to said central system (120) by wireless communication (130).

9. A procedure as claimed in any of the previous claim, at which said other units (111, 112, 113, 114) are located at a distance from said appointed unit (110) which is limited by the longest distance at which said wireless short distance communication (131, 132, 133, 134) is possible.

10. A procedure as claimed in any of the previous claims, at which said short distance communication (131, 132, 133, 134) is made directly between said appointed unit (110) and each of said other units (111, 112, 113, 114).

11. A procedure as claimed in any of the claims 1-7, at which said short distance communication (131, 132, 133, 134) is made directly between said appointed unit (110) and an appointed subset of said other units (111. 112, 113, 114) and via a unit in the first subset between said appointed unit (110) and a second subset of said other units (111, 112, 113, 114).

## Patentansprüche

1. Verfahren zur Positionsbestimmung von zwei oder mehr Einheitten (110, 111, 112, 113, 114) für drahtlose Kommunikation, das die Schritte einschließt:
die zwei oder mehr Einheiten (110, 111, 112, 113, 114) in eine bestimmte Einheit (110) und andere Einheiten (111, 112, 113, 114) aufzuteilen;
die anderen Einheiten (111, 112, 113, 114) betreffende Information von den anderen Einheiten (111, 112, 113, 114) zu der bestimmten Einheit (110) mithilfe einer drahtlosen Kurzreichweiten- oder Nahkommunikation (131, 132, 133, 134) zu senden (201; 301; 402; 501); und
die zwei oder mehr Einheiten (110, 111, 112, 113, 114) betreffende Information von der bestimmten Einheit (110) zu einem zentralen System (120) mithilfe von drahtlose Kommunikation (130) zu senden (202; 303; 403; 502).

2. Verfahren nach Anspruch 1, bei dem der Schritt, Information zu übertragen, die Schritte einschließt:
zu der bestimmten Einheit (110) der zwei oder mehr Einheiten (110, 111, 112, 113, 114) Identitätsinformation anderer Einheiten (111, 112, 113, 114) der zwei oder mehr Einheiten (110, 111, 112, 113, 114) von den anderen Einheiten (111, 112, 113, 114) durch drahtlose Nahkommunikation (131, 132, 133, 134) zu senden (201; 301; 402; 501); und
Identitätsinformation der zwei oder mehr Einheiten (110, 111, 112, 113, 114) von der bestimmten Einheit (110) zu dem zentralen System (120) durch drahtlose Kommunikation (130) zu übertragen (202; 303; 403; 502).

3. Verfahren nach Anspruch 2, das weiter die Schritte aufweist:
in dem zentralen System (120) Information zu empfangen, die die Position der bestimmten Einheit (110) betrifft; und
in dem zentralen System (120) die Position der anderen Einheiten (111, 112, 113, 114) durch die Position der bestimmten Einheit (110) näherungsweise zu bestimmen.

4. Verfahren nach Anspruch 3, bei dem der Schritt, in dem zentralen System (120) Information zu empfanden, die die Position der bestimmten Einheit (110) betrifft, den Schritt einschließt:
in dem zentralen System (120) die Position der bestimmten Einheit (110) durch ein Positionsbestimmungssystem zu bestimmen.

5. Verfahren nach Anspruch 4, bei dem die Identitätsinformation der zwei oder mehr Einheiten (110, 111, 112, 113, 114) von der bestimmten Einheit (110) zu dem zentralen System (120) über ein Funksignal übertragen wird und bei dem das zentrale System (120) die Position der bestimmten Einheit (110) aufgrund des Empfangs des Funksignals bestimmt.

6. Verfahren nach Anspruch 3, das weiter die Schritte aufweist:
in einer bestimmten Einheit (110) der zwei oder mehr Einheiten (110, 111, 112, 113, 114) Information zu empfangen, die die Position der bestimmten Einheit (110) betrifft; und
die bestimmte Einheit (110) betreffende Information von der bestimmten Einheit (110) zu dem zentralen System (120) durch drahtlose Kommunikation (130) zu übertragen.

7. Verfahren nach Anspruch 2, das weiter den Schritt aufweist:
in dem zentralen System (120) die Position der jeweiligen Einheit (110, 111, 112, 113, 114) der zwei oder mehr Einheiten (110, 111, 112, 113, 114) zu bestimmen.

8. Verfahren nach Anspruch 2, das weiter die Schritte aufweist:
in einer jeweiligen Einheit (110, 111, 112, 113, 114) der zwei oder mehr Einheiten (110, 111, 112, 113, 114) Information bezüglich der Position der Einheit (110, 111, 112, 113, 114) zu empfangen;
zu der bestimmten Einheit (110) der zwei oder mehr Einheiten (110, 111, 112, 113, 114) Information bezüglich der Position der entsprechenden Einheit (111, 112, 113, 114) von anderen Einheiten (111, 112, 113, 114) der zwei oder mehr Einheiten (110, 111, 112, 113, 114) von den anderen Einheiten (111, 112, 113, 114) durch drahtlose Nahkommunikation (131, 132, 133, 134) zu übertragen (201; 301; 402; 501); und
Information bezüglich der Position der zwei oder mehr Einheiten (110, 111, 112, 113, 114) von der bestimmten Einheit (110) zu dem zentralen System (120) durch drahtlose Kommunikation (130) zu übertragen (202; 303; 403; 502).

9. Verfahren nach einem der vorangehenden Ansprüche, bei dem die anderen Einheiten (111, 112, 113, 114) in einer Entfernung von der bestimmten Einheit (110) angeordnet sind, die durch die größte Entfernung begrenzt ist, über die die drahtlose Nahkommunikation (131, 132, 133, 134) möglich ist.

10. Verfahren nach einem der vorangehenden Ansprüche, bei dem die Nahkommunikation (131, 132, 133, 134) direkt zwischen der bestimmten Einheit (110) und jeder der anderen Einheit (111, 112, 113, 114) vorgenommen wird.

11. Verfahren nach einem der Ansprüche 1-7, bei dem die Nahkommunikation (131, 132, 133, 134) direkt zwischen der bestimmten Einheit (110) und einer bestimmten Untermenge der anderen Einheit (111, 112, 113, 114) und über eine Einheit in der ersten Untermenge zwischen der bestimmten Einheit (110) und einer zweiten Untermenge der anderen Einheiten (111, 112, 113, 114) vorgenommen wird.

## Revendications

1. Procédure de positionnement de deux ou plusieurs unités (110, 111, 112, 113, 114) de communication sans fil, comprenant les étapes :
de séparation desdites deux ou plusieurs unités (110, 111 112, 113, 114) en une unité spécifiée (110) et les autres unités (111, 112, 113, 114) ;
démission (201 ; 301 ; 402 ; 501) d'informations se rapportant auxdites autres unités (111, 112, 113, 114) à partir desdites autres unités (111, 112, 113, 114) vers ladite unité spécifiée (110) au moyen d'une communication sans fil à courte distance (131, 132, 133, 134); et
d'émission (202 ; 303 ; 403 ; 502) d'informations se rapportant auxdites deux ou plusieurs unités (110, 111, 112, 113, 114) à partir de ladite unité spécifiée (110) vers un système central (120) au moyen d'une communication sans fil (130),

2. Procédure selon la revendication 1, dans laquelle l'étape d'émission d'informations comporte les étapes :
vers l'unité spécifiée (110) desdites deux ou plusieurs unités (110, 111, 112, 113, 114), d'émission (201 ; 301 ; 402 ; 501) d'informations d'identité des autres unités (111, 112, 113, 114) desdites deux ou plusieurs unités (110, 111, 112, 113, 114) à partir desdites autres unités (111, 112, 113, 114) par une communication sans fil à courte distance (131, 132, 133, 134) ; et
d'émission (202 ; 303 ; 403 ; 502) d'informations d'identité desdites deux ou plusieurs unités (110, 111, 112, 113, 114) à partir de ladite unité spécifiée (110) vers ledit système central (120) par une communication sans fil (130).

3. Procédure selon la revendication 2, comportant, en outre, les étapes :
dans ledit système central (120), de réception d'informations se rapportant à la position de ladite unité spécifiée (110) ; et
dans ledit système central (120), de réalisation d'une approximation (204 ; 304) de la position desdites autres unités (111, 112, 113, 114) par la position de ladite unité spécifiée (110).

4. Procédure selon la revendication 3, dans laquelle l'étape, dans ledit système central (120), de réception d'informations se rapportant à la position de ladite unité spécifiée (110) comporte l'étape :
dans ledit système central (120), de détermination de la position de ladite unité spécifiée (110) au moyen d'un système de positionnement.

5. Procédure selon la revendication 4, dans laquelle lesdites informations d'identité desdites deux ou plusieurs unités (110, 111, 112, 113, 114) sont transmises à partir de ladite unité spécifiée (110) vers ledit système central (120) par l'intermédiaire d'un signal radio, et dans laquelle ledit système central (120) détermine la position de ladite unité spécifiée (110) sur la base de la réception dudit signal radio.

6. Procédure selon la revendication 3, comportant, en outre, les étapes :
dans une unité spécifiée (110) desdites deux ou plusieurs unités (110, 111, 112, 113, 114), de réception d'informations se rapportant à la position de ladite unité spécifiée (110) ; et
d'émission d'informations se rapportant à ladite unité spécifiée (110) à partir de ladite unité spécifiée (110) vers ledit système central (120) par une communication sans fil (130).

7. Procédure selon la revendication 2, comportant, en outre, l'étape :
dans ledit système central (120), de détermination de la position de l'unité respective (110, 111, 112, 113, 114) desdites deux ou plusieurs unités (110, 111, 112, 113, 114).

8. Procédure selon la revendication 2, comportant, en outre, les étapes :
dans l'unité respective (110, 111, 112, 113, 114) desdites deux ou plusieurs unités (110, 111, 112, 113, 114), de réception d'informations se rapportant à la position de l'unité (110, 111, 112, 113, 114);
vers l'unité spécifiée (110) desdites deux ou plusieurs unités (110, 111, 112, 113, 114), d'émission (201 ; 301 ; 402 ; 501) d'informations se rapportant à la position de l'unité respective (111, 112, 113, 114) des autres unités (111, 112, 113, 114) desdites deux ou plusieurs unités (110, 111, 112, 113, 114) à partir desdites autres unités (111, 112, 113, 114) par une communication sans fil à courte distance (131, 132, 133, 134); et
d'émission (202 ; 303 ; 403 ; 502) d'informations se rapportant à la position desdites deux ou plusieurs unités (110, 111 ; 112, 113, 114) à partir de ladite unité spécifiée (110) vers ledit système central (120) par une communication sans fil (130).

9. Procédure selon l'une quelconque des revendications précédentes, dans laquelle lesdites autres unités (111, 112, 113, 114) sont situées à une distance par rapport à ladite unité spécifiée (110) qui est limitée par la distance la plus longue à laquelle ladite communication sans fil à courte distance (131, 132, 133, 134) est possible.

10. Procédure selon l'une quelconque des revendications précédentes, dans laquelle ladite communication à courte distance (131, 132, 133, 134) est réalisée directement entre ladite unité spécifiée (110) et chacune desdites autres unités (111, 112, 113, 114).

11. Procédure selon l'une quelconque des revendications 1 à 7, dans laquelle ladite communication à courte distance (131, 132, 133, 134) est réalisée directement entre ladite unité spécifiée (110) et un sous-ensemble spécifié desdites autres unités (111, 112, 113, 114) et par l'intermédiaire d'une unité dans le premier sous-ensemble entre ladite unité spécifiée (110) est un second sous-ensemble desdites autres unités (111, 112, 113, 114).
